(19)

Europäisches
Patentamt
European
Patent Office
Office européen
des brevets

(11) **EP 4 443 245 A1**

(12) **EUROPEAN PATENT APPLICATION**
published in accordance with Art. 153(4) EPC

(43) Date of publication:
**09.10.2024 Bulletin 2024/41**

(21) Application number: **22901781.9**

(22) Date of filing: **30.11.2022**

(51) International Patent Classification (IPC):
*G03H 1/08* (2006.01)     *H04N 19/597* (2014.01)
*H04N 19/147* (2014.01)

(52) Cooperative Patent Classification (CPC):
**G03H 1/08; H04N 19/147; H04N 19/597**

(86) International application number:
**PCT/KR2022/019221**

(87) International publication number:
**WO 2023/101423 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  30.11.2021  KR 20210169184
           29.11.2022  KR 20220163466

(71) Applicants:
• **Electronics and Telecommunications
Research Institute
Daejeon 34129 (KR)**
• **University-Industry Cooperation Group Of
Kyung Hee University
Yongin-si, Gyeonggi-do 17104 (KR)**
• **Industry-University Cooperation Foundation
Hanyang
University Erica Campus
Ansan-si, Gyeonggi-do 04763 (KR)**

(72) Inventors:
• **OH, Kwan Jung**
  **Daejeon 34129 (KR)**
• **KIM, Jin Woong**
  **Daejeon 34129 (KR)**
• **KIM, Hui Yong**
  **Daejeon 34090 (KR)**
• **BAN, Hyun Min**
  **Yongin-si Gyeonggi-do 17103 (KR)**
• **CHOI, Seung Mi**
  **Daejeon 34806 (KR)**
• **KO, Hyun Suk**
  **Ansan-si Gyeonggi-do 15588 (KR)**

(74) Representative: **Betten & Resch
Patent- und Rechtsanwälte PartGmbB
Maximiliansplatz 14
80333 München (DE)**

(54) **IMAGE ENCODING AND DECODING METHOD AND APPARATUS BASED ON PERIODICITY
OF PHASE SIGNAL**

(57)    The image encoding and decoding method and apparatus based on a periodicity on phase signal are disclosed. One embodiment on an encoding an image, the method comprising: generating a prediction signal for an input signal, calculating an initial residual signal, which is a difference value between the input signal and the prediction signal, generating a transformed residual signal by transforming a value of the initial residual signal to have a size value within a preset range, and encoding the transformed residual signal, wherein the transformed residual signal is generated based on a period of a signal, wherein the preset range is a range of the period of the signal.

EP 4 443 245 A1

FIG.8

```
                    ( Start )
                        │
                        ▼
    ┌───────────────────────────────────────────┐
    │      image prediction mean for generating  │
    │   a prediction signal with respect to an original│
    │     signal that is currently to be encoded  │
    └───────────────────────────────────────────┘
                        │
                        ▼
    ┌───────────────────────────────────────┐      ┌──────────────────────────────┐
    │    residual signal generating mean for │◄─────│  generate the residual signal to │
    │    generating a residual signal between│      │  be within a range of [−π, π]    │
    │ the original signal and the prediction signal│  └──────────────────────────────┘
    └───────────────────────────────────────┘
                        │
                        ▼
    ┌───────────────────────────────────────┐
    │         encoding mean for encoding     │
    │            the residual signal         │
    └───────────────────────────────────────┘
                        │
                        ▼
    ┌───────────────────────────────────────┐
    │      decoding mean for reconstructing  │
    │         the encoded residual signal    │
    └───────────────────────────────────────┘
                        │
                        ▼
    ┌───────────────────────────────────────┐      ┌──────────────────────────────┐
    │    reconstructing mean for reconstructing│◄────│    generate the reconstructed   │
    │     the original signal using the decoded│     │        signal by performing     │
    │   residual signal and the prediction signal│    │  clipping on the reconstructed  │
    └───────────────────────────────────────┘      │   image using a periodicity     │
                        │                            └──────────────────────────────┘
                        ▼
    ┌───────────────────────────────────────┐
    │         filtering mean for filtering   │
    │       the reconstructed original signal │
    └───────────────────────────────────────┘
                        │
                        ▼
                    (  End  )
```

## Description

### Technical Field

The present disclosure relates to an encoding and/or decoding method for a phase signal by considering periodicity in order to provide a technique of enhancing compression efficiency that not only reduces a compression bit rate in encoding of a phase signal but also minimizes quality degradation of a decoded image. According to the present disclosure, the compression encoding performance of phase signals such as holograms may be improved by generating a difference signal and a restoration signal in consideration of the periodicity of the phase signal.

### Background Art

Holography is a technology of representing a complete three-dimensional image by solving the vergence-accommodation conflict problem of the existing stereoscopy method that handles the amplitude and phase information of lights. Holography is a technology that obtains a hologram by recording an interference pattern, which is generated by interference between an object beam reflected in a subject and a reference beam, and represents a three-dimensional image in a stereoscopic space by illuminating the obtained hologram with the reference beam.

Conventionally, when residual signal of a phase signal like a hologram is encoded, a rate-distortion optimization method is used that does not consider the periodicity of the signal.

### Disclosure

### Technical Problem

The present disclosure is to provide an encoding and/or decoding method of a phase signal considering a periodicity, with the aim of increasing the compression efficiency by reducing the amount of compressed bits of the phase signal encoding while minimizing the degradation of the image quality performance of the decoded phase signal and hologram image.

The technical problems solved by the present disclosure are not limited to the above technical problems and other technical problems which are not described herein will become apparently understandable to those skilled in the art from the following description.

### Technical Solution

A method for decoding an image, the method comprising: generating a prediction signal for a current signal, decoding a residual signal from a bitstream, generating an initial reconstructed signal based on the prediction signal and the residual signal, and generating a transformed reconstructed signal by transforming a value of the initial reconstructed signal to have a size value of a preset range, wherein the transformed reconstructed signal is generated based on a period of a signal, wherein the preset range is a period range of a signal.

In one embodiment, wherein an absolute value of the maximum value of the preset range is equal to an absolute value of the minimum value of the preset range.

In one embodiment, wherein the generating the transformed reconstructed signal is determined whether to be performed based on a size of the initial reconstructed signal.

In one embodiment, wherein in response to the size of the initial reconstructed signal being within the preset range, the generating the transformed reconstructed signal is determined not to be performed.

In one embodiment, wherein the generating the transformed reconstructed signal is characterized by transforming the reconstructed signal by using a maximum value of the preset range based on a sign of the initial reconstructed signal in response to a size value of the initial reconstructed signal not being a value within the preset range.

In one embodiment, wherein the generating the transformed reconstructed signal is characterized by generating the transformed reconstructed signal from the initial reconstructed signal by using clipping function having a minimum value of the preset range and a maximum value of the preset range as input values.

In one embodiment, wherein the decoding method further comprises normalizing a range of a value of the initial reconstructed signal, in response to the value of the initial reconstructed signal is greater than the preset range.

A method for encoding an image, the method comprising: generating a prediction signal for an input signal, calculating an initial residual signal, which is a difference value between the input signal and the prediction signal, generating a transformed residual signal by transforming a value of the initial residual signal to have a size value within a preset range, and encoding the transformed residual signal, wherein the transformed residual signal is generated based on a period of a signal, wherein the preset range is a range of the period of the signal.

In one embodiment, wherein an absolute value of the maximum value of the preset range is equal to an absolute value of the minimum value of the preset range.

In one embodiment, wherein the generating the transformed residual signal is determined whether to be performed based on a size of the initial residual signal.

In one embodiment, wherein in response to the size of the initial residual signal being within the preset range, the generating the transformed reconstructed signal is determined not to be performed.

In one embodiment, wherein the generating the transformed residual signal is characterized by transforming the residual signal by using a maximum value of the preset range based on a sign of the initial residual signal in response to a size value of the initial residual signal not being a value within the preset range.

In one embodiment, wherein the method further comprising: decoding the transformed residual signal, generating an initial reconstructed signal based on the prediction signal and the residual signal, and generating a transformed reconstructed signal by transforming a value of the initial reconstructed signal to have a size value of a preset range, wherein the generating the transformed reconstructed signal is characterized by generating the transformed reconstructed signal from the initial reconstructed signal by using clipping function having a minimum value of the preset range and a maximum value of the preset range as input values.

In one embodiment, wherein the encoding method further comprises normalizing a range of a value of the initial residual signal, in response to the value of the initial residual signal is greater than the preset range.

A recording medium storing a bitstream generated by an image encoding method, wherein the image encoding method comprises: generating a prediction signal for an input signal, calculating an initial residual signal, which is a difference value between the input signal and the prediction signal, generating a transformed residual signal by transforming a value of the initial residual signal to have a size value within a preset range, and encoding the transformed residual signal, wherein the transformed residual signal is generated based on a period of a signal, wherein the preset range is a range of the period of the signal.

The features briefly summarized above with respect to the disclosure are merely exemplary aspects of the detailed description of the disclosure that follows, and do not limit the scope of the disclosure.

**Advantageous Effects**

According to the present disclosure, compressed encoding performance of a phase signal such as a hologram can be improved by generating a residual signal and a reconstructed signal considering the periodicity of the phase signal.

The technical problems solved by the present disclosure are not limited to the above technical problems and other technical problems which are not described herein will become apparently understandable to those skilled in the art from the following description.

**Description of Drawings**

FIG. 1 is a block diagram showing a configuration of an encoding apparatus according to an embodiment to which the present disclosure is applied.

FIG. 2 is a block diagram showing a configuration of a decoding apparatus according to an embodiment and to which the present disclosure is applied.

FIG. 3 is a view illustrating an embodiment of a range of a signal to which the present disclosure is applied.

FIG. 4 is a view illustrating an embodiment of an input signal having a range to which the present disclosure is applied.

FIG. 5 is a view illustrating a first reconstructed signal generated according to a method of generating a first reconstructed signal of the present invention.

FIG. 6 is a view illustrating a first reconstructed signal generated according to a method of generating a first reconstructed signal of the present invention.

FIG. 7 is a view illustrating a method for generating residual signal by using periodicity of signal.

FIG. 8 is a view illustrating an embodiment of a configuration of an apparatus for encoding a digital hologram of an input signal.

FIG. 9 is a view illustrating an embodiment of a configuration of an apparatus for decoding a digital hologram and operation for decoding the digital hologram of input signal.

FIG. 10 is a view illustrating an embodiment of an operation for encoding the digital hologram of input signal.

FIG. 11 is a view illustrating an embodiment of an operation for encoding the digital hologram of input signal.

FIG. 12 is a view illustrating an embodiment of generated residual signal.

FIG. 13 is a view illustrating an embodiment of generated residual signal.

FIG. 14 is a diagram illustrating an embodiment of an operation for encoding the digital hologram of input signal.

FIG. 15 is a view illustrating an embodiment of generated residual signal.

FIG. 16 is a view illustrating an embodiment of generated residual signal.

FIG. 17 is a view illustrating an embodiment of an operation for generating reconstructed signal by using a periodicity of digital hologram signal.

FIG. 18 is a view illustrating an embodiment of an operation for generating reconstructed signal by using a periodicity of digital hologram signal.

FIG. 19 is a view illustrating an embodiment of generated residual signal.

FIG. 20 is a view illustrating an embodiment of generated residual signal.

FIG. 21 is a view illustrating an embodiment of an operation for generating reconstructed signal by using a periodicity of digital hologram signal.

FIG. 22 is a view illustrating an embodiment of generated residual signal.

FIG. 23 is a view illustrating an embodiment of generated residual signal.

FIG. 24 is a view illustrating a phase range of input signal and a method for normalizing the phase range.

Mode for Invention

Hereinafter, embodiments of the present invention will be described in detail with reference to the accompanying drawings, which will be easily implemented by those skilled in the art. However, the present invention may be embodied in many different forms and is not limited to the embodiments described herein.

In describing exemplary embodiments of the present invention, well-known functions or constructions will not be described in detail since they may unnecessarily obscure the understanding of the present invention. The same constituent elements in the drawings are denoted by the same reference numerals, and a repeated description of the same elements will be omitted.

When an element is referred to as being "connected to" or "coupled with" another element, it can not only be directly connected or coupled to the other element but also it can be understood that intervening elements may be present. Also, when a specific element is referred to as being "included" or "comprising", elements other than the corresponding element are not excluded, but additional elements may be included in embodiments of the present invention or the scope of the present invention.

It will be understood that, although the terms including ordinal numbers such as "first", "second", etc. these terms are only used to distinguish one element from another and are not to limit the order and the priority of the elements. For example, the 'first' component in one embodiment may be named the 'second' component in other one embodiment, and the 'second' component in one embodiment may also be similarly named the 'first' component in other embodiment. The components as used herein may be independently shown to represent their respective distinct features, but this does not mean that each component should be configured as a separate hardware or software unit. In other words, the components are shown separately from each other for ease of description. At least two of the components may be combined to configure a single component, or each component may be split into a plurality of components to perform a function. Such combination or separation also belongs to the scope of the present invention without departing from the gist of the present invention.

In the present disclosure, all of the constituent elements described in various embodiments should not be construed as being essential elements but some of the constituent elements may be optional elements. Accordingly, embodiments configured by respective subsets of constituent elements in a certain embodiment also may fall within the scope of the present disclosure. In addition, embodiments configured by adding one or more elements to various elements also may fall within the scope of the present disclosure.

Furthermore, terms such as "... part", " ... unit", and " ... module" mean a unit which processes one or more functions or operations, and may be implemented by hardware, software, or a combination of hardware and software.

Overview of digital holography technology

Holography is a technology that reproduces a complete three-dimensional image by resolving the vergence-accommodation conflict problem of the existing stereo method dealing with the amplitude and phase information of light. Holography is a technology that obtains a hologram by recording an interference pattern generated by interference between object light and reference light reflected from a subject and reproduces a three-dimensional image in a three-dimensional space by projecting reference light onto the obtained hologram.

Digital holography technology refers to obtaining three-dimension image data with image obtaining device such as Change Coupled Device (CCD), by using holography and reproducing hologram image with a display device such as Spatial Light Modulator (SLM). An interference pattern obtained from a camera such as a CCD or generated by a numerical method may be referred to as a digital hologram.

SLM broadly refers to any kind of device that modulates light according to position. The beam projectors and shadow arts using shadow can also be seen as an example of using the spatial light modulation.

A technique for obtaining a holographic image can be divided into a method for obtaining 3D information of a real object and a method for obtaining an image from computer graphics.

Technologies, which is able to obtain the real objects, include self-interference technology, optical scanning holography, and computer-generated hologram (CGH). Computer Generated Holography (CGH) is a research field that synthesizes holographic images by numerically simulating the propagation of light waves. Computer Generated Hologram (CGH) is a holographic image obtained by numerically simulating the propagation of light waves.

Phase-only Hologram: In a hologram, a complex signal can be represented by both amplitude and phase. A phase hologram refers to a hologram composed of only phase information in complex data.

The present invention relates to a compression encoding/decoding method for a phase signal such as a phase hologram.


Description of Terms

Encoder: may mean an apparatus performing encoding.

Decoder: may mean an apparatus performing decoding

Block: may mean an M×N array of a sample. Herein, M and N may mean positive integers, and the block may mean a sample array of a two-dimensional form.

Unit: may refer to an encoding and decoding unit. When encoding and decoding an image, the unit may be a region generated by partitioning a single image. In addition, the unit may mean a subdivided unit when a single image is partitioned into subdivided units during encoding or decoding. That is, an image may be partitioned into a plurality of units. When encoding and decoding an image, a predetermined process for each unit may be performed. A single unit may be partitioned into sub-units that have sizes smaller than the size of the unit. Depending on functions, the unit may mean a block, a macroblock, a coding tree unit, a code tree block, a coding unit, a coding block), a prediction unit, a prediction block, a residual unit), a residual block, a transform unit, a transform block, etc. In addition, in order to distinguish a unit from a block, the unit may include a luma component block, a chroma component block associated with the luma component block, and a syntax element of each chroma component block. The unit may have various sizes and forms, and particularly, the form of the unit may be a two-dimensional geometrical figure such as a square shape, a rectangular shape, a trapezoid shape, a triangular shape, a pentagonal shape, etc. In addition, unit information may include at least one of a unit type indicating the coding unit, the prediction unit, the transform unit, etc., and a unit size, a unit depth, a sequence of encoding and decoding of a unit, etc.

Reconstructed Neighbor block: may mean a neighbor block adjacent to a current block and which has been already spatially/temporally encoded or decoded. Herein, the reconstructed neighbor block may mean a reconstructed neighbor unit.

Unit Depth: may mean a partitioned degree of a unit. In a tree structure, the highest node (Root Node) may correspond to the first unit which is not partitioned. Also, the highest node may have the least depth value.

Symbol: may mean at least one of a syntax element, a coding parameter, and a transform coefficient value of an encoding/decoding target unit.

Parameter Set: corresponds to header information among a configuration within a bitstream. At least one of a video parameter set, a sequence parameter set, a picture parameter set, and an adaptation parameter set may be included in a parameter set. In addition, a parameter set may include a slice header, and tile header information.

Bitstream: may mean a bitstream including encoded image information.

A coding parameter may include information (flag, index, etc.) such as syntax element that is encoded in an encoder and signaled to a decoder, and information derived when performing encoding or decoding. The coding parameter may mean information required when encoding or decoding an image. For example, at least one value or a combination form of value of an intra prediction mode, an inter prediction mode, intra prediction direction, motion information, motion vector, a reference picture list, a motion vector predictor, a motion merge candidate, a transform type, a transform size, whether to use additional transform, in-loop filter information, whether residual signal exists, quantization parameter, syntax model, transform coefficient, a level of transform coefficient, coded block pattern (CBP), coded block flag (CBF), an order of displaying/outputting image, slice information, tile information, picture type, whether merge mode is used, whether skip mode is used, a size of a block, a depth of a block, information on block partition, a size of unit, a depth of unit, information on unit partition and/or statistics may be included in the coding parameter.

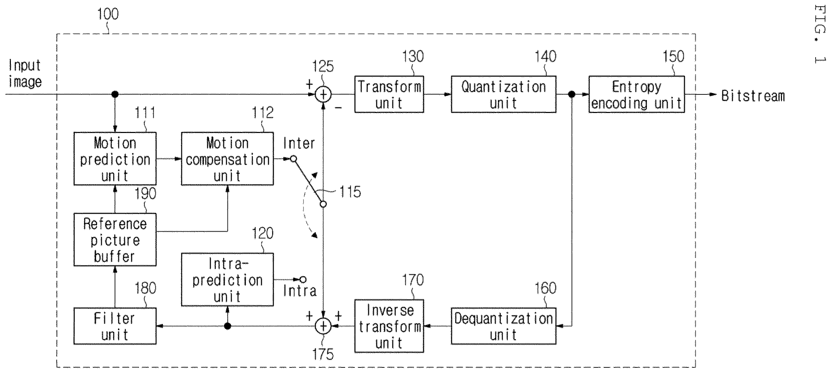

FIG. 1 is a block diagram showing a configuration of an encoding apparatus according to an embodiment to which the present invention is applied.

An encoding apparatus 100 may be an encoder, a video encoding apparatus, or an image encoding apparatus. A video may include at least one image. The encoding apparatus 100 may sequentially encode at least one image.

Referring to FIG. 1, the encoding apparatus 100 may include a motion prediction unit 111, a motion compensation unit 112, an intra-prediction unit 120, a switch 115, a subtractor 125, a transform unit 130, a quantization unit 140, an entropy encoding unit 150, a dequantization unit 160, an inverse-transform unit 170, an adder 175, a filter unit 180, and a reference picture buffer 190.

The encoding apparatus 100 may perform encoding of an input image by using an intra mode or an inter mode or both. In addition, encoding apparatus 100 may generate a bitstream through encoding the input image, and output the generated bitstream. The generated bitstream may be stored in a computer readable recording medium, or may be streamed through a wired/wireless transmission medium. When an intra mode is used as a prediction mode, the switch 115 may be switched to an intra. Alternatively, when an inter mode is used as a prediction mode, the switch 115 may be switched to an inter mode. Herein, the intra mode may mean an intra-prediction mode, and the inter mode may mean an inter-prediction mode. The encoding apparatus 100 may generate a prediction block for an input block of the input image. In addition, the encoding apparatus 100 may encode a residual of the input block and the prediction block after the prediction block being generated. The input image may be called as a current image that is a current encoding target. The input block may be called as a current block that is current encoding target, or as an encoding target block.

When a prediction mode is an intra mode, the intra-prediction unit 120 may use a pixel value of a block that has been already encoded/decoded and is adjacent to a current block as a reference pixel. The intra-prediction unit 120 may perform spatial prediction by using a reference pixel, or generate prediction samples of an input block by performing spatial prediction. Herein, the intra prediction may mean intra-prediction,

When a prediction mode is an inter mode, the motion prediction unit 111 may retrieve a region that best matches with an input block from a reference image when performing motion prediction, and deduce a motion vector by using the retrieved region. The reference image may be stored in the reference picture buffer 190.

The motion compensation unit 112 may generate a prediction block by performing motion compensation using a motion vector. Herein, inter-prediction may mean inter-prediction or motion compensation.

When the value of the motion vector is not an integer, the motion prediction unit 111 and the motion compensation unit 112 may generate the prediction block by applying an interpolation filter to a partial region of the reference picture. In order to perform inter prediction or motion compensation on a coding unit, it may be determined that which mode among a skip mode, a merge mode, an advanced motion vector prediction (AMVP) mode, and a current picture referring mode is used for motion prediction and motion compensation of a prediction unit included in the corresponding coding unit. Then, inter prediction or motion compensation may be differently performed depending on the determined mode.

The subtractor 125 may generate a residual block by using a residual of an input block and a prediction block. The residual block may be called as a residual signal.

The transform unit 130 may generate a transform coefficient by performing transform of a residual block, and output the generated transform coefficient. Herein, the transform coefficient may be a coefficient value generated by performing transform of the residual block. When a transform skip mode is applied, the transform unit 130 may skip transform of the residual block.

A quantized level may be generated by applying quantization to the transform coefficient or to the residual signal. Hereinafter, the quantized level may be also called as a transform coefficient in embodiments.

The quantization unit 140 may generate a quantized coefficient level by quantizing the transform coefficient to a quantization parameter and output the quantized transform coefficient level. Herein, the quantization unit 140 may quantize the transform coefficient by using a quantization matrix.

The entropy encoding unit 150 may generate a bitstream by performing entropy encoding according to a probability distribution on values calculated by the quantization unit 140 or on coding parameter values calculated when performing encoding, and output the generated bitstream. The entropy encoding unit 150 may perform entropy encoding of sample information of an image and information for decoding an image. For example, the information for decoding the image may include a syntax element.

When entropy encoding is applied, symbols are represented so that a smaller number of bits are assigned to a symbol having a high chance of being generated and a larger number of bits are assigned to a symbol having a low chance of being generated, and thus, the size of bit stream for symbols to be encoded may be decreased. The entropy encoding unit 150 may use an encoding method for entropy encoding such as exponential Golomb, context-adaptive variable length coding (CAVLC), context-adaptive binary arithmetic coding (CABAC), etc. For example, the entropy encoding unit 150 may perform entropy encoding by using a variable length coding/code (VLC) table. In addition, the entropy encoding unit 150 may deduce a binarization method of a target symbol and a probability model of a target symbol/bin, and perform arithmetic coding by using the deduced binarization method, and a context model.

In order to encode a transform coefficient level(quantized level), the entropy encoding unit 150 may change a two-dimensional block form coefficient into a one-dimensional vector form by using a transform coefficient scanning method. For example, the entropy encoding unit may change vector into a 1D vector block form by scanning the coefficients of the block using up right scanning. Depending on the size of the transform unit and the intra-prediction mode, vertical scan or horizontal scan may be used instead of upright scan. That is, it may be determined which scan method among upright scan, vertical scan, and horizontal scan is used according to the size of the transform unit and the intra-prediction mode.

A coding parameter may include information (flag, index, etc.) such as syntax element that is encoded in an encoder and signaled to a decoder, and information derived when performing encoding or decoding. The coding parameter may mean information required when encoding or decoding an image. For example, at least one value or a combination form of value of an intra prediction mode, an inter prediction mode, intra prediction direction, motion information, motion vector, a reference picture list, a motion vector predictor, a motion merge candidate, a transform type, a transform size, whether to use additional transform, in-loop filter information, whether residual signal exists, quantization parameter, syntax model, transform coefficient, a level of transform coefficient, coded block pattern (CBP), coded block flag (CBF), an order of displaying/outputting image, slice information, tile information, picture type, whether merge mode is used, whether skip mode is used, a size of a block, a depth of a block, information on block partition, a size of unit, a depth of unit, information on unit partition and/or statistics may be included in the coding parameter.

The residual signal may mean the difference between the original signal and the prediction signal. Or the residual signal may be a signal generated by transforming the difference between the original signal and the prediction signal. Or the residual signal may be a signal generated by transforming and quantizing the difference between the original signal and the prediction signal. The residual block may be signal in a unit of block.

When the encoding apparatus 100 performs encoding through inter-prediction, an encoded current image may be used as a reference image for another image that is processed afterwards. Accordingly, the encoding apparatus 100 may reconstruct or decode the encoded current image, or store the reconstructed or decoded image as a reference image. Inverse quantization and inverse transformation on the encoded the current image for decoding may be processed.

A quantized level may be dequantized in the dequantization unit 160, or may be inverse-transformed in the inverse-transform unit 170. A dequantized or inverse-transformed coefficient or both may be added with a prediction block by the adder 175. By adding the dequantized or inverse-transformed coefficient or both with the prediction block, a reconstructed block may be generated.

A reconstructed block may pass through the filter unit 180. The filter unit 180 may apply at least one of a deblocking filter, a sample adaptive offset (SAO), and an adaptive loop filter (ALF) to the reconstructed block or a reconstructed image. The filter unit 180 may be called as an in-loop filter.

The deblocking filter may remove block distortion generated in boundaries between blocks. In order to determine whether or not to apply a deblocking filter, whether or not to apply a deblocking filter to a current block may be determined based samples included in several rows or columns which are included in the block. When a deblocking filter is applied to a block, a strong filter or a weak filter can be applied depending on the required deblocking filtering strength. In addition, in applying the deblocking filter, horizontal filtering and vertical filtering can be processed in parallel when vertical filtering and horizontal filtering are performed.

In order to compensate an encoding error, a proper offset value may be added to a pixel value by using a sample adaptive offset. The sample adaptive offset may correct an offset of a deblocked image from an original image by a pixel unit. A method of partitioning pixels of an image into a predetermined number of regions, determining a region to which an offset is applied, and applying the offset to the determined region, or a method of applying an offset in consideration of edge information on each pixel may be used.

The adaptive loop filter may perform filtering based on a comparison result of the filtered reconstructed image and the original image. Samples included in an image may be partitioned into predetermined groups, a filter to be applied to each group may be determined, and differential filtering may be performed for each group. Information of whether or not to apply the ALF may be signaled by coding units (CUs), and a form and coefficient of the ALF to be applied to each block may vary.

The reconstructed block or the reconstructed image having passed through the filter unit 180 may be stored in the reference picture buffer 190.

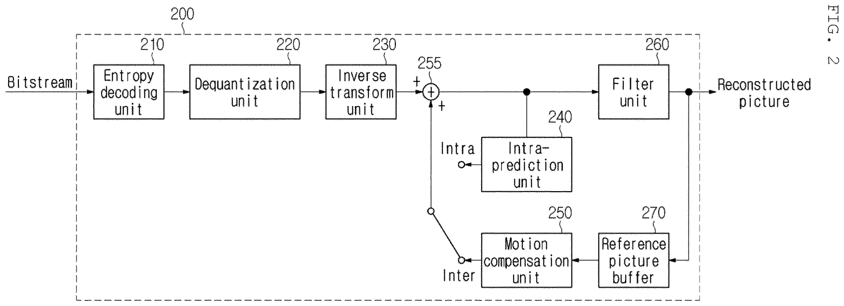

FIG. 2 is a block diagram showing a configuration of a decoding apparatus according to an embodiment and to which the present invention is applied.

A decoding apparatus 200 may a decoder, a video decoding apparatus, or an image decoding apparatus.

Referring to FIG. 2, the decoding apparatus 200 may include an entropy decoding unit 210, a dequantization unit 220, an inverse-transform unit 230, an intra-prediction unit 240, a motion compensation unit 250, an adder 225, a filter unit 260, and a reference picture buffer 270.

The decoding apparatus 200 may receive a bitstream output from the encoding apparatus 100. The decoding apparatus 200 may receive a bitstream stored in a computer readable recording medium, or may receive a bitstream that is streamed through a wired/wireless transmission medium. The decoding apparatus 200 may decode the bitstream by using an intra mode or an inter mode. In addition, the decoding apparatus 200 may generate a reconstructed image generated through decoding or a decoded image, and output the reconstructed image or decoded image.

When a prediction mode used when decoding is an intra mode, a switch may be switched to an intra. Alternatively, when a prediction mode used when decoding is an inter mode, a switch may be switched to an inter mode.

The decoding apparatus 200 may obtain a reconstructed residual block by decoding the input bitstream, and generate a prediction block. When the reconstructed residual block and the prediction block are obtained, the decoding apparatus 200 may generate a reconstructed block that becomes a decoding target by adding the reconstructed residual block with the prediction block. The decoding target block may be called a current block.

The entropy decoding unit 210 may generate symbols by entropy decoding the bitstream according to a probability distribution. The generated symbols may include a symbol of a quantized level form. Herein, an entropy decoding method may be an inverse-process of the entropy encoding method described above.

In order to decode a transform coefficient level (quantized level), the entropy decoding unit 210 may change a one-directional vector form coefficient into a two-dimensional block form by using a transform coefficient scanning method. For example, the entropy decoding unit may change vector into a 2D block form by scanning the coefficients of the block using up right scanning. Depending on the size of the transform unit and the intra-prediction mode, vertical scan or horizontal scan may be used instead of upright scan. That is, it may be determined which scan method among upright scan, vertical scan, and horizontal scan is used according to the size of the transform unit and the intra-prediction mode.

A quantized level may be dequantized in the dequantization unit 220, or inverse-transformed in the inverse-transform unit 230. The quantized level may be a result of dequantizing or inverse-transforming or both, and may be generated as a reconstructed residual block. Herein, the dequantization unit 220 may apply a quantization matrix to the quantized level.

When an intra mode is used, the intra-prediction unit 240 may generate a prediction block by performing spatial prediction that uses a pixel value of a block adjacent to a decoding target block and which has been already decoded.

When an inter mode is used, the motion compensation unit 250 may generate a prediction block by performing motion compensation that uses a motion vector and a reference image stored in the reference picture buffer 270. When the value of the motion vector is not an integer, the motion compensation unit 250 may generate the prediction block by applying an interpolation filter to a partial region of the reference picture. In order to perform inter prediction or motion compensation on a coding unit, it may be determined that which mode among a skip mode, a merge mode, an advanced motion vector prediction (AMVP) mode, and a current picture referring mode is used for motion prediction and motion compensation of a prediction unit included in the corresponding coding unit. Then, inter prediction or motion compensation may be differently performed depending on the determined mode.

The reconstructed residual block and the prediction block may be added via the adder 255. The block generated by adding the reconstructed residual block and the prediction block may pass the filter 260. The filter unit 260 may apply at least one of a deblocking filter, a sample adaptive offset, and an adaptive loop filter to the reconstructed block or reconstructed image. The filter unit 260 may output the reconstructed image. The reconstructed block or reconstructed image may be stored in the reference picture buffer 270 and used when performing inter-prediction.

Original signal: means an input signal to be encoded, which is image on the phase signal, in the phase signal encoding and decoding method.

Residual signal: The residual signal may mean the difference between the original signal and the prediction signal. Or the residual signal may be a signal generated by transforming the difference between the original signal and the prediction signal. Or the residual signal may be a signal generated by transforming and quantizing the difference between the original signal and the prediction signal. The residual block may be signal in a unit of block.

First reconstructed signal: may mean reconstructed signal generated by the adder 175 between the decoded residual signal and the prediction signal from the inverse transform unit 170 of FIG. 1. Alternatively, the primary reconstructed signal may mean signal generated by the adder 255 between the decoded residual signal and the prediction signal output from the inverse-transform unit 230 of FIG. 2.

Second reconstructed signal: may mean final reconstructed signal that has passed through the filter unit 180 in FIG. 1, or reconstructed signal stored in the reference picture buffer 190. Alternatively, the second reconstructed signal may mean final reconstructed signal that has passed through the filter unit 260 of FIG. 2 or a reconstructed signal stored in the reference picture buffer 270.

IBDI (Internal Bit-Depth Increase): A technology for providing high-performance coding efficiency and low processing complexity in video codecs and increasing coding efficiency by increasing accuracy by reducing rounding errors by increasing the bit-by-bit internal operation of the input signal in higher bit units. IBDI technology is applied to all coding processes except reference memory and is applied to the floating-point number arithmetic such as the intra prediction, interpolation for ME/MC, transformation, and in-loop filtering to reduce rounding error and increase precision, thereby increasing the coding efficiency.

Memory compression technology: A technology designed to reduce the increase in reference memory size and memory bandwidth according to IBDI application, or to reduce the memory bandwidth generated during ME (motion estimation) and MC (motion compensation) processes even for 8-bit operations.

N (BitDepth): In the method of encoding and decoding a phase signal, the present invention denotes the bit depth (BitDepth) of an original signal to be encoded as n. When the IBDI technology is applied in the video compression process, the bit depth for applying IBDI is set to n.

Range of original signal: the range of an original signal value is equal to or greater than 0 and is equal to or

less than $2^n$-1.

Range of residual signal: the range of a residual signal value exceeds $-2^n$ and is less than $2^n$.

Generating residual signal and reconstructed signals

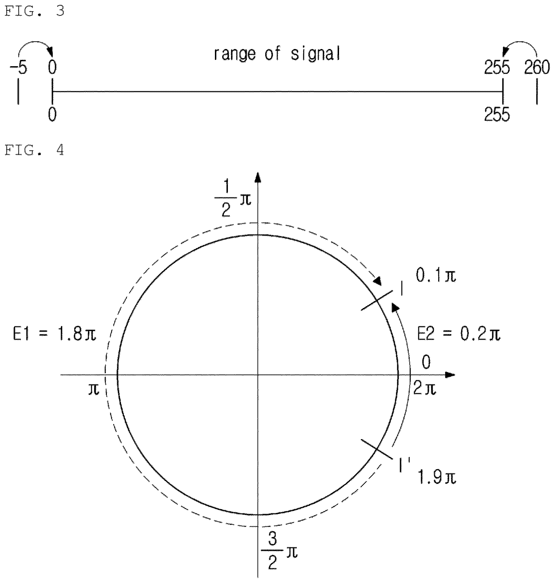

FIG. 3 is a view illustrating an embodiment of a range of a signal to which the present disclosure is applied.

In the present disclosure, when the range of the signal is expressed as a digital signal, it is expressed as [0, $2^n$ - 1] depending on the bit depth, n, and the range of the residual signal value may be expressed as [-($2^n$ - 1), $2^n$ - 1] .

During the encoding process, if the range of the signal is out of [0, $2^n$ - 1] or the range of the residual signal value is out of [-($2^n$ - 1), $2^n$ - 1], the encoding apparatus may use clipping to bring the signal into range.

During the process of generating the reconstructed signal, the range of the signal may be out of [0, $2^n$ - 1], and during the process of generating the residual signal, the range may be out of [-($2^n$ - 1), $2^n$ - 1].

As shown in FIG. 3, for a value of n of 8, the signal may have a range of [0, 255].

According to FIG. 3, when the value of the signal is -5 and goes below zero, the encoding apparatus may clip the value of the signal to zero. And if the value of the signal is 260 and exceeds 255, the encoding apparatus may clip the value of the signal to 255.

In the present invention, by considering the periodicity of the phase signal and applying the clipping of the signal differently according to the characteristics of the phase signal, the compression efficiency of the signal can be increased.

A digital phase signal has different characteristics from a two-dimensional digital image signal that does not have a periodicity. The phase signal can be expressed as a value in the range of [0, $2\pi$] because the periodicity of the phase is considered. Since the phase range of the digital phase signal is [0, $2\pi$], the phase range of the residual signal is [-$2\pi$, 2n].

The idea of generating the residual signal of the present disclosure is illustrated using the example of FIG. 4.

FIG. 4 is a view illustrating an embodiment of an input signal having a range to which the present disclosure is applied.

Referring to FIG. 4, the value of the phase signal is expressed as an angle above the unit, and the original signal (I) and the prediction signal (I') may be presented.

Depending on the periodicity of the signal, the residual signal values of the original signal and the prediction signal may have two values, one where the magnitude of the signal is greater than $\pi$ and the other where the magnitude is less than or equal to $\pi$. In FIG. 4, the values of the two residual signals may correspond to E1 and E2, respectively.

According to the present disclosure, the encoding apparatus can increase the compression efficiency of the signal by selecting a residual signal in the range [-n, n] in which the size of the signal is smaller among two residual signals that can be generated.

Encoding a residual signal in the range [-n, $\pi$ can represent the residual signal with fewer bits than the conventional residual signal range [-$2\pi$, $2\pi$. Thus, compression efficiency can be increased.

According to the present disclosure, when the range of the phase signal is represented as a digital signal, the range of the phase signal can be represented as [0, $2^n$ - 1] depending on the bit depth, n, and the range of the residual signal value can be represented as [-2 $^{(n-1)}$, 2$^{(n-1)}$].

Expressing the continuous signal

The range of a continuous periodic signal can be expressed as [0, $2\pi$] using period 2. In this case, 0 and $2\pi$ are the same value, and the range of the continuous periodic signal may include only one or the other.

example: [0, $2\pi$), (0, $2\pi$]

According to one embodiment of the present disclosure, for ease of presentation, the range of a continuous periodic signal is represented as [0, $2\pi$].

Also, the range of a residual signal between continuous periodic signals can be expressed as [-$2\pi$, $2\pi$] using a period of 2n. However, in the present disclosure, by selecting a residual signal with a smaller signal size, the range of the residual signal with a smaller size is expressed as the range of the residual signal. Therefore, the range of the residual signal can be expressed as [-n, $\pi$]. In this case, -$\pi$ and $\pi$ are the same value, and the range of the residual signal can contain only one of two.

For example: [-n, $\pi$), (-$\pi$, $\pi$

In the present disclosure, the range of the residual signal of a continuous signal is expressed as [-n, $\pi$ for ease of presentation.

example: [-$\pi$, $\pi$), (-$\pi$, $\pi$]

In the present disclosure, the range of the residual signal of a continuous signal is expressed as [-n, $\pi$ for ease of presentation.

Expressing the digital signal

The phase range of a digital signal, [0, 2$\pi$], is represented as [0, $2^n$] depending on the bit depth, n. As with the continuous signal representation, 0 and $2^n$ have the same value, so the range of a phase signal can also be represented as a range containing only one of two.

example: [0, $2^n$ - 1], [1, $2^n$]

In the present disclosure, a discrete signal is represented in the range [0, $2^n$ - 1] where any signal can be represented with only a bit depth n.
The phase range of a digital signal, [-n, $\pi$], is expressed as [-$2^{(n-1)}$, $2^{(n-1)}$], depending on the bit depth, n. As same as the expressing the continuous signal, -$2^{(n-1)}$ and $2^{(n-1)}$ have the same value. Therefore, the range of a phase signal can also be represented as a range containing only one of two.

example: [-$2^{(n-1)}$. $2^{(n-1)}$), (-$2^{(n-1)}$, $2^{(n-1)}$]

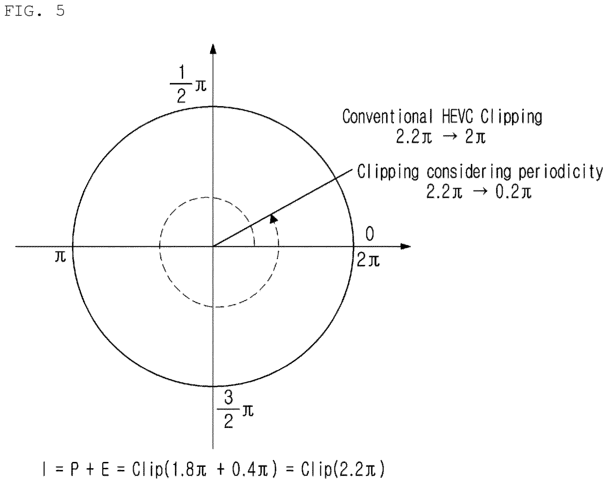

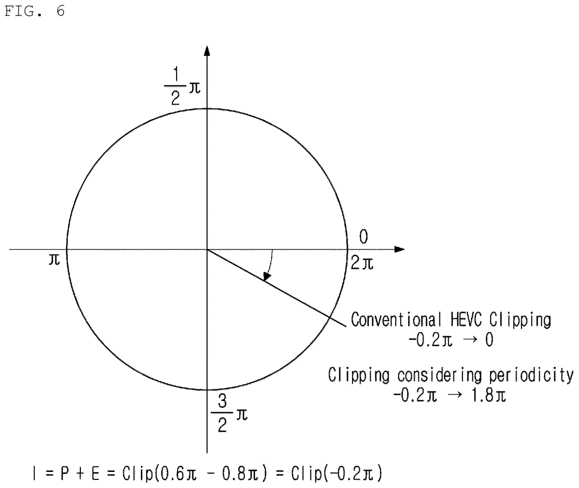

In the present disclosure, a discrete signal is represented in the range [-$2^{(n-1)}$, $2^{n-1}$-1], where any signal can be represented with only a bit depth of n.
When the first reconstructed signal is generated using the residual signal and the prediction signal, the value of the signal may be less than or greater than the range of the signal in the phase hologram.
According to the prior art, the first reconstructed signal may be clipped to a minimum value if it is less than a minimum value and to a maximum value if it is greater than a maximum value so as to be included in the range of pixel values.
When performing the clipping, it is necessary to calculate a value in the range [0, 2$\pi$] that is more similar to the original signal by using the periodicity of the signal.
The method of generating a first reconstructed signal of the present disclosure will be described using the examples of FIG. 5 and FIG. 6.
As shown in FIGS. 5 and 6, the value of the phase signal is expressed as an angle above the unit circle, and the position of the first reconstructed signal generated by the sum of the prediction signal and the residual signal is indicated on the unit circle before clipping is performed in each case. In each equation, I is the first reconstructed signal, P is the prediction signal, and E is the residual signal.
FIG. 5 is a diagram illustrating the case where the sum of the prediction signal and the residual signal is greater than 2n. According to the conventional HEVC standard, a first reconstructed signal is generated by converting to a value of 2$\pi$ through clipping. In the present disclosure, a first reconstructed signal can be generated by converting the prediction signal and the residual signal to a value corresponding to the actual value as shown in FIG. 5 using the periodicity of the signal.
FIG. 6 is a diagram illustrating a case where the sum of the prediction signal and the residual signal is less than zero. According to the existing HEVC standard, the first reconstructed signal is generated by converting to a value of 0 through clipping. In the present disclosure, the first reconstructed signal is generated by converting the prediction signal and the residual signal to a value corresponding to the actual value, as shown in FIG. 6, using the periodicity of the signal.

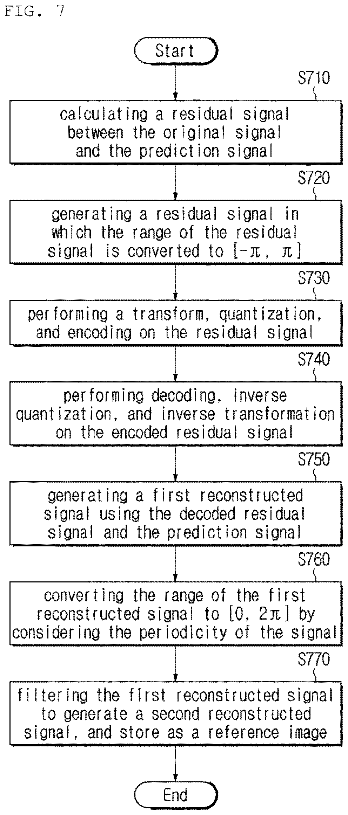

FIG. 7 is a view illustrating a method for generating residual signal by using periodicity of signal.
Referring to FIG. 7, At step S710, the encoding apparatus may calculate a residual signal between the original signal and the prediction signal.
At step S720, the encoding apparatus may generate a residual signal in which the range of the residual signal is converted to [-n, $\pi$].
At step S730, the encoding apparatus may perform a transform, quantization, and encoding on the residual signal.
At step S740, the encoding apparatus may perform decoding, inverse quantization, and inverse transformation on the encoded residual signal.
At step S750, the encoding apparatus may generate a first reconstructed signal using the decoded residual signal and the prediction signal.
At step S760, the encoding apparatus may convert the range of the first reconstructed signal to [0, 2$\pi$] by

considering the periodicity of the signal.

At step S770, the encoding apparatus may filter the first reconstructed signal to generate a second reconstructed signal, and store as a reference image.

Herein, the operations from step S740 to step S770 may be performed by a decoding apparatus. In addition, a digital hologram encoding/decoding method including the operations from step S710 to step S770 and an embodiment of an apparatus for performing the digital hologram encoding/decoding method may be described as follows.

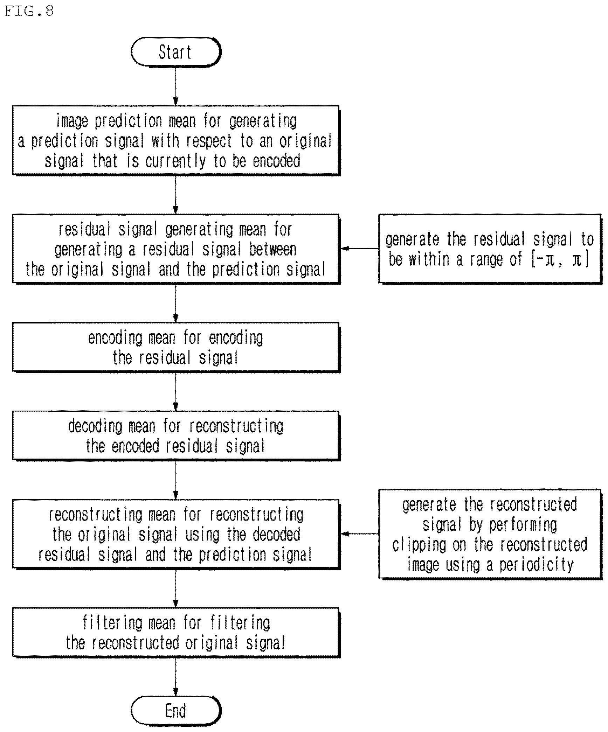

FIG. 8 is a view illustrating an embodiment of a configuration of an apparatus for encoding a digital hologram of an input signal.

The encoding apparatus may include image prediction mean for generating a prediction signal with respect to an original signal that is currently to be encoded.

The encoding apparatus may include residual signal generating mean for generating a residual signal between the original signal and the prediction signal. In generating the residual signal, the encoding apparatus may generate the residual signal by using a periodicity of the signal.

According to one embodiment, in the present disclosure, the residual signal generating mean of the encoding apparatus may generate a residual signal in the range [-n, $\pi$ by using a periodicity of the signal when generating a residual signal for a phase signal using an original signal and a prediction signal.

The encoding apparatus may include encoding mean for encoding the residual signal.

The encoding apparatus may include decoding mean for reconstructing the encoded residual signal.

The encoding apparatus may include reconstructing mean for reconstructing the original signal using the decoded residual signal and the prediction signal.

The reconstructing mean of the encoding apparatus may generate the first reconstructed signal by performing clipping on the reconstructed image using a periodicity to generate the first reconstructed signal using the decoded, inverse-quantized, and inverse-transformed residual signal and the prediction signal.

The encoding apparatus may include filtering mean for filtering the reconstructed original signal.

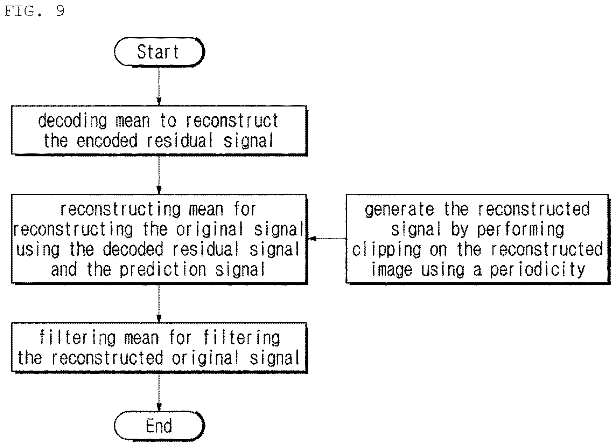

FIG. 9 is a view illustrating an embodiment of a configuration of an apparatus for decoding a digital hologram and operation for decoding the digital hologram of input signal.

The decoding apparatus may include decoding mean to reconstruct the encoded residual signal.

The decoding apparatus may include reconstructing mean for reconstructing the original signal using the decoded residual signal and the prediction signal.

The reconstructed signal generating mean of the decoding apparatus may generate the first reconstructed signal by performing clipping on the reconstructed image using a periodicity to generate the first reconstructed signal using the decoded, inverse-quantized, and inverse-transformed residual signal and prediction signal.

The encoding apparatus may include filtering mean for filtering the reconstructed original signal.

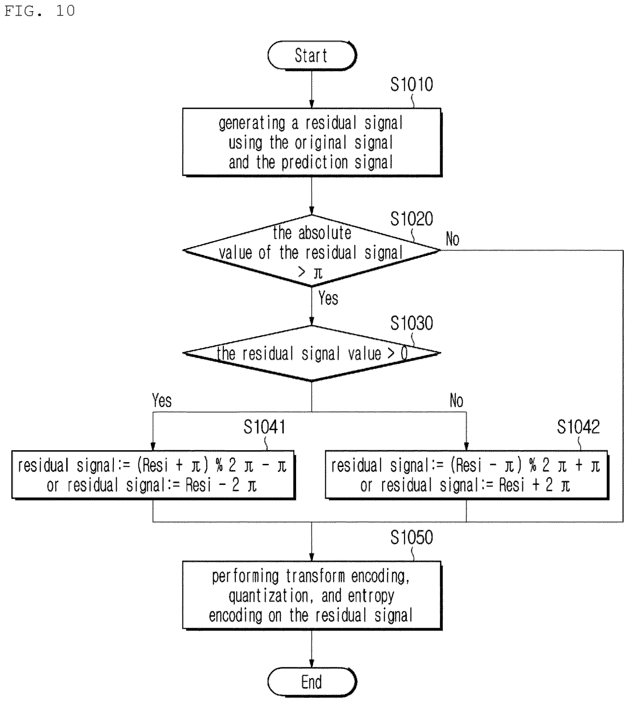

FIG. 10 is a view illustrating an embodiment of an operation for encoding the digital hologram of input signal.

In the present disclosure, when generating a residual signal for a phase signal using an original signal and a prediction signal, a residual signal with a smaller size in the range [-$\pi$, $\pi$ is selected from two residual signal values that can be generated due to the periodicity. The algorithm for generating the residual signal is as follows.

At step S1010, the encoding apparatus may generate a residual signal using the original signal and the prediction signal.

At step S1020, the encoding apparatus may determine whether the absolute value of the residual signal is greater than n. Here, if the absolute value of the residual signal is not greater than $\pi$, the encoding apparatus may perform transform encoding, quantization, and entropy encoding on the residual signal.

If the absolute value of the size of the residual signal value is greater than n, At step S1030, the encoding apparatus may determine whether the residual signal value is positive. In generating a residual signal value in the range [-$\pi$, $\pi$], the encoding apparatus may calculate it using one of the following two methods.

If the residual signal value is positive, at step S1041, the encoding apparatus may derive the residual signal as follows.

According to the first residual signal derivation method, at step S1041, Resi' may be derived as follows.

[Equation 1]

$$\mathrm{Resi}' := (\mathrm{Resi} + \pi)\% \ (2\pi) - \pi$$

Resi may indicate an initial residual signal, and Resi' may indicate an adjusted residual signal. According to the second residual signal derivation method, at step S1041, Resi' may be derived as follows.

[Equation 2]

$$\text{Resi}' := \text{Resi} - 2\pi$$

Resi may indicate an initial residual signal, and Resi' may indicate an adjusted residual signal.

If the residual signal value is negative, at step S1042, the encoding apparatus may derive the residual signal as follows. According to the first residual signal derivation method, at step S1042, Resi' may be derived as follows.

[Equation 3]

$$\text{Resi}' := (\text{Resi} - \pi)\% \ (2\pi) + \pi$$

Resi may indicate an initial residual signal, and Resi' may indicate an adjusted residual signal.

According to the second residual signal derivation method, at step S1041, Resi' may be derived as follows.

[Equation 4]

$$\text{Resi}' := \text{Resi} + 2\pi$$

Resi may indicate an initial residual signal, and Resi' may indicate an adjusted residual signal.

Here, if a second residual signal derivation method is performed, the encoding apparatus may select a residual signal generated by the second residual signal derivation method.

At step S1050, the encoding apparatus may perform transform encoding, quantization, and entropy encoding on the residual signal.

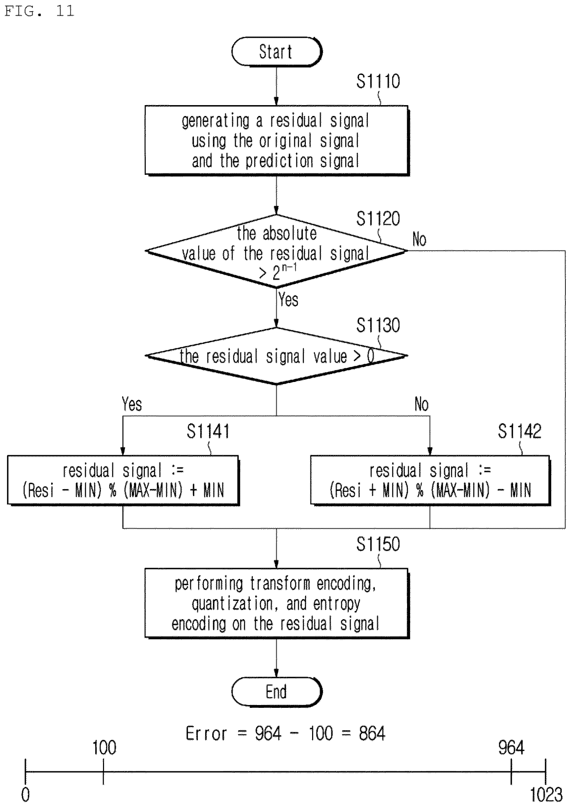

FIG. 11 is a view illustrating an embodiment of an operation for encoding the digital hologram of input signal.

In the present disclosure, when generating a residual signal for a phase signal using an original signal and a prediction signal, a residual signal in the range $[-2^{(n-1)}, 2^{(n-1)}]$ is selected that has a smaller value for two residual signal values that may be generated due to periodicity. The algorithm for generating the residual signal is as follows.

At step S1110, encoding apparatus generates residual signal by using the original signal and the prediction signal.

At step S1120, the encoding apparatus may determine whether the absolute value of the residual signal is greater than $2^n$-1. If the absolute value of the residual signal is not greater than $2^n$-1, the encoding apparatus may perform transform encoding, quantization, and entropy encoding on the residual signal.

If the absolute value of the residual signal value is greater than $2^n$-1, at step S1130, the encoding apparatus may determine whether the residual signal value is positive.

If the residual signal value is positive, at step S1141, the encoding apparatus may derive the residual signal as follows.

[Equation 5]

$$\text{Resi}' := (\text{Resi} - \text{MIN})\% \ (\text{MAX} - \text{MIN}) + \text{MIN}$$

Resi indicates the initial residual signal, MIN can mean the minimum value of the residual signal $-2^{n-1}$, and MAX can mean the maximum value of the residual signal $2^n$-1.

If the residual signal value is negative, at step S1142, the encoding apparatus may derive the residual signal as follows.

[Equation 6]

$$\text{Resi}' := (\text{Resi} + \text{MIN})\% \ (\text{MAX} - \text{MIN}) - \text{MIN}$$

Resi indicates the initial residual signal, MIN can mean the minimum value of the residual signal $-2^{n-1}$, and MAX can mean the maximum value of the residual signal $2^n$-1.

And, if Resi' is derived, the encoding apparatus may select Resi'.

At step S1150, the encoding apparatus may perform transform encoding, quantization, and entropy encoding on the residual signal.

Examples of residual signals generated by the above methods may be as described below.

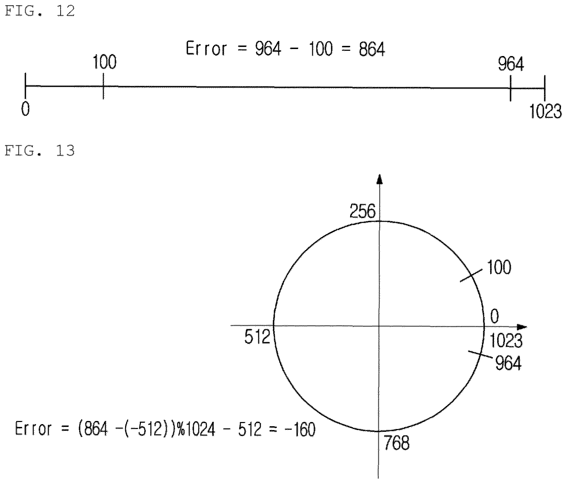

FIG. 12 and FIG. 13 are views illustrating embodiments of generated residual signal.

For a value of n = 10, the signal without periodicity can be represented as shown in FIG. 12. On the other hand, for a value of n = 10, the signal with periodicity may be represented as shown in FIG. 13. Depending on whether the signal has a periodicity or not, the two signals may have the same value but different magnitudes of the residual signal. When generating the residual signal of a signal with periodicity, if the original signal has a value of 964 and the prediction signal has a value of 100, the size of the residual signal without considering the periodicity is fixed at 864, as shown in FIG. 12. On the other hand, even if the signals have the same value, if the periodicity is considered, it can also have a value of 160, as shown in FIG. 13. In the present disclosure, the above algorithm can be used to generate a residual signal with a value of -160, where the magnitude of the residual signal is smaller.

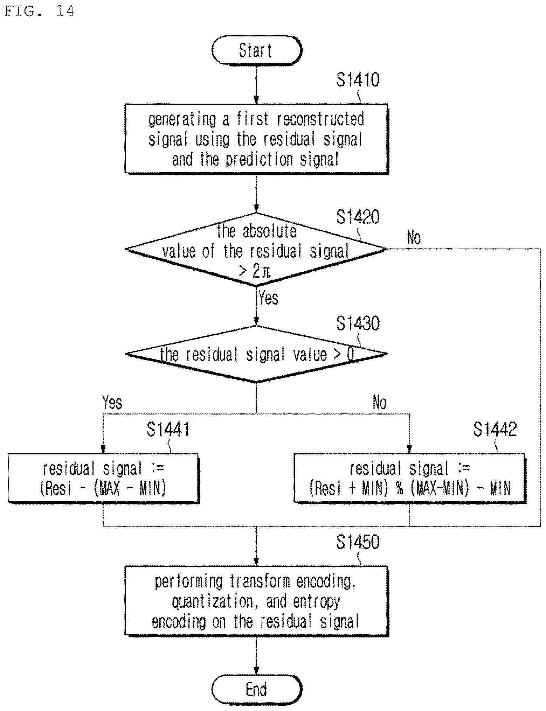

FIG. 14 is a view illustrating an embodiment of an operation for encoding the digital hologram of input signal.

In the present disclosure, when generating a residual signal for a phase signal using an original signal and a prediction signal, a residual signal in the range $[-2^{(n-1)}, 2^{(n-1)}]$ is selected that has a smaller value for two residual signal values that may be generated due to periodicity. The algorithm for generating the residual signal is as follows.

At step S1410, the encoding apparatus generates a residual signal using the original signal and the prediction signal.

At step S1420, the encoding apparatus may determine whether the absolute value of the residual signal is greater than $2^n$-1. If the absolute value of the residual signal is no greater than $2^{n-1}$, the encoding apparatus may perform transform encoding, quantization, and entropy encoding on the residual signal.

If the absolute value of the magnitude of the residual signal value is greater than $2^{n-1}$, at step S1430, the encoding apparatus may determine whether the residual signal value is positive.

If the residual signal value is positive, at step S1441, the encoding apparatus may derive the residual signal as follows.

$$[\text{Equation 7}]$$

$$\text{Resi}' := \text{Resi} - (\text{MAX} - \text{MIN})$$

Resi may refer to the initial residual signal, and Resi' may be the residual signal derived based on the initial residual signal. MIN may mean a minimum value of the residual signal, and MAX may mean a maximum value of the residual signal.

If the residual signal value is negative, at step S1442, the encoding apparatus may derive the residual signal as follows.

$$[\text{Equation 8}]$$

$$\text{Resi}' := (\text{Resi} + \text{MIN})\% (\text{MAX} - \text{MIN}) - \text{MIN}$$

Resi may refer to the initial residual signal, and Resi' may be the residual signal derived based on the initial residual signal. Here, MIN may mean a minimum value of $-2^{n-1}$ of the residual signal, and MAX may mean a maximum value of $2^{n-1}$ of the residual signal. And, if Resi' is derived, the encoding apparatus may select Resi'.

At step S1450, the encoding apparatus may perform transform encoding, quantization, and entropy encoding on the residual signal.

Embodiments of residual signals generated by the above methods may be as described below.

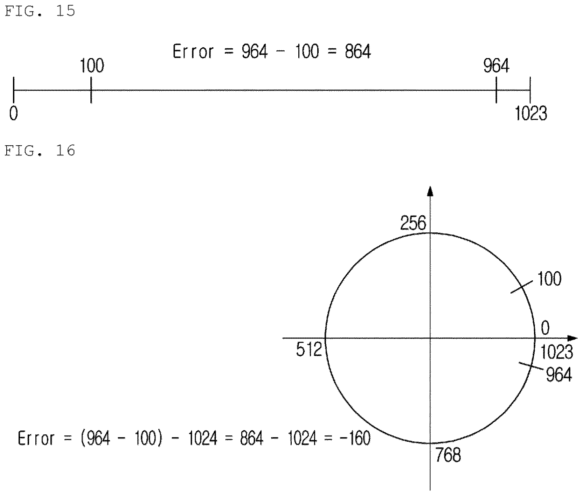

FIG. 15 and FIG. 16 are views illustrating embodiments of generated residual signal.

For a value of n = 10, the signal without periodicity can be represented as shown in FIG. 15. On the other hand, for a value of n = 10, a signal with periodicity may be represented as shown in FIG. 16. Depending on whether the signal has a periodicity or not, the two signals may have the same value but different magnitudes of the residual signal. When generating the residual signal of a signal with periodicity, if the original signal has a value of 964 and the prediction signal has a value of 100, the size of the residual signal without considering the periodicity is fixed at 864, as shown in FIG. 15. On the other hand, even if the signals have the same value, if the periodicity is considered, it can also have a value of 160, as shown in FIG. 16. In the present disclosure, the above algorithm can be used to generate a residual signal with a value of -160, where the size of the residual signal is smaller.

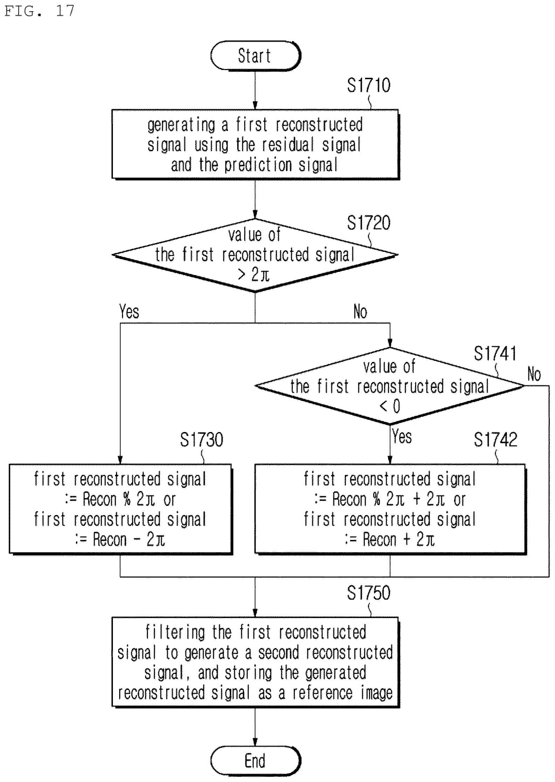

FIG. 17 is a view illustrating an embodiment of an operation for generating reconstructed signal by using a periodicity of digital hologram signal.

When generating a reconstructed signal using decoded, inverse-quantized, and inverse-transformed residual signal and prediction signals, there are cases where the value of the signal is smaller or larger than the range $[0, 2\pi]$. Conventionally, clipping is performed with a value of 0 when the signal is smaller than the minimum value, and with a value of 2n when the signal is larger than the maximum value. In the present disclosure, the first reconstructed signal can be clipped to have a value more similar to the actual value by considering the periodicity of the signal. The algorithm for generating the first reconstructed signal is as follows.

At step S1710, the decoding apparatus generates a first reconstructed signal using the residual signal and the prediction signal.

At step S1720, the decoding apparatus may determine whether the value of the first reconstructed signal is greater than 2n. If the value of the first reconstructed signal is greater than 2n, at step S1730, the decoding apparatus may generate the first reconstructed signal using one of the following methods.

[Equation 9]

$$\text{Recon}' := \text{Recon} \,\%\, (2\pi)$$

[Equation 10]

$$\text{Recon}' := \text{Recon} - 2\pi$$

Recon is a reconstructed signal, and Recon' may refer to a reconstructed signal generated based on Recon.

If the value of the first reconstructed signal is no greater than 2n, at step S1741, the decoding apparatus may determine whether the value of the first reconstructed signal is less than zero. If the value of the first reconstructed signal is greater than or equal to 0, the decoding apparatus may filter the first reconstructed signal to generate a second reconstructed signal, and store the second reconstructed signal as a reference image.

If the value of the first reconstructed signal is not greater than zero, at step S1742, the decoding apparatus may generate the first reconstructed signal using one of the following methods.

[Equation 11]

$$\text{Recon}' := \text{Recon} \,\%\, (2\pi) + 2\pi$$

[Equation 12]

$$\text{Recon}' := \text{Recon} + 2\pi$$

Recon is a reconstructed signal, and Recon' can refer to a reconstructed signal generated based on Recon.

At step S1750, the decoding apparatus may filter the first reconstructed signal to generate a second reconstructed signal, and store the generated reconstructed signal as a reference image.

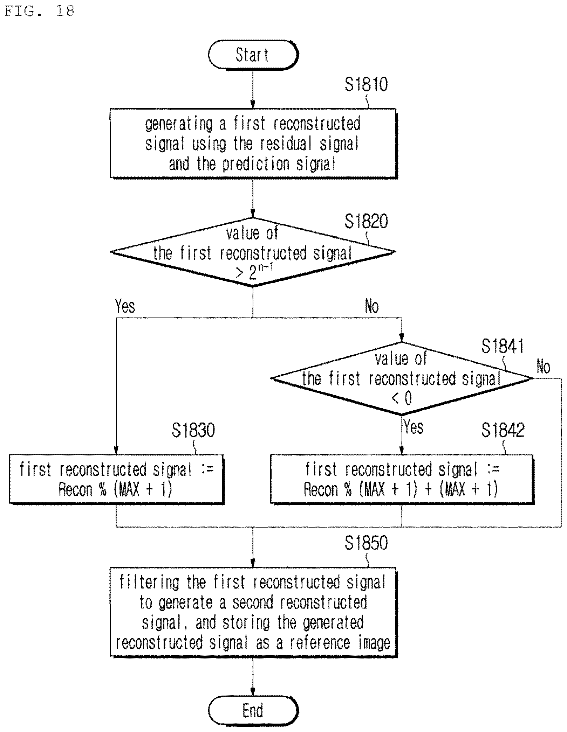

FIG. 18 is a view illustrating an embodiment of an operation for generating reconstructed signal by using a periodicity of digital hologram signal.

When generating a reconstructed signal using decoded, inverse-quantized and inverse-transformed residual signal and prediction signal, there are cases where the value of the signal is smaller or larger than the range $[0, 2^{n-1}]$. In the conventional method, clipping is performed with a value of 0 when the signal is smaller than the minimum value and $2^{n-1}$ when the signal is larger than the maximum value. In the present disclosure, the first reconstructed signal can be clipped to have a value more similar to the actual value by considering the periodicity of the signal. The algorithm for generating the first reconstructed signal is as follows.

At step S1810, the decoding apparatus generates the first reconstructed signal using the residual signal and the prediction signal.

At step S1820, the decoding apparatus may determine whether the value of the first reconstructed signal exceeds $2^{n-1}$. If the value of the first reconstructed signal exceeds $2^{n-1}$, at step S1830, the decoding apparatus may adjust the first reconstructed signal using the following method.

[Equation 13]

$$\text{Recon}' := \text{Recon} \ \% \ (\text{MAX} + 1)$$

Recon is the reconstructed signal, and Recon' can refer the reconstructed signal generated based on Recon. MAX can refer the maximum value of the residual signal, $2^n$-1.

If the value of the first reconstructed signal is not greater than $2^{n-1}$, at step S1841, the decoding apparatus may determine whether the value of the first reconstructed signal is less than zero. If the value of the first reconstructed signal is greater than zero, the decoding apparatus may filter the first reconstructed signal to generate a second reconstructed signal, and store the second reconstructed signal as a reference image.

If the value of the first reconstructed signal is less than zero, at step S1842, the decoding apparatus may adjust the first reconstructed signal using the following method.

[Equation 14]

$$\text{Recon}' := \text{Recon} \ \% \ (\text{MAX} + 1) + (\text{MAX} + 1)$$

Herein, Recon is the reconstructed signal and Recon' can refer to the reconstructed signal generated based on Recon. MAX can mean the maximum value of the residual signal, $2^n$-1.

At step S1850, the decoding apparatus may filter the first reconstructed signal to generate a second reconstructed signal, and store the generated reconstructed signal as a reference image.

Embodiments of reconstructed signals generated by the above method may be as described below.

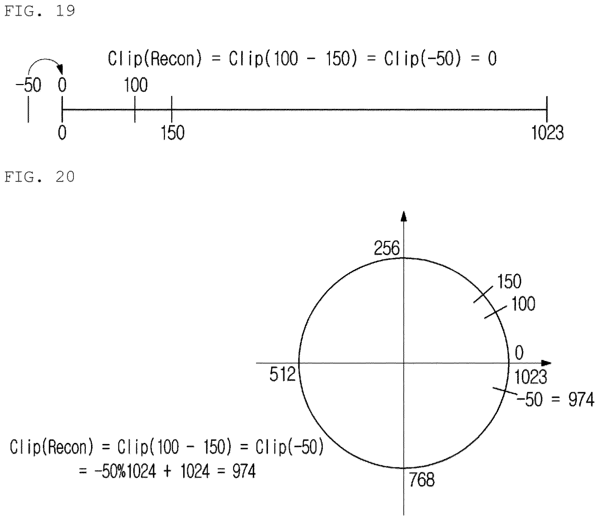

FIG. 19 and FIG. 20 are views illustrating embodiments of generated residual signal.

For example, for a value of n of 10, a signal without periodicity can be represented as shown in FIG. 19. On the other hand, for a value of n = 10, the signal with periodicity may be represented as shown in FIG. 20. When generating the first reconstructed signal, if the value of the residual signal is -150 and the value of the prediction signal is 100, the value of the first reconstructed signal is -50, as shown in FIG. 19, in HEVC, the first reconstructed signal is generated with a value of 0 through the clipping function. In the present disclosure, the value of the first reconstructed signal can be clipped to 974, which is the same value as -50, by considering the periodicity of the signal, as shown in FIG. 20.

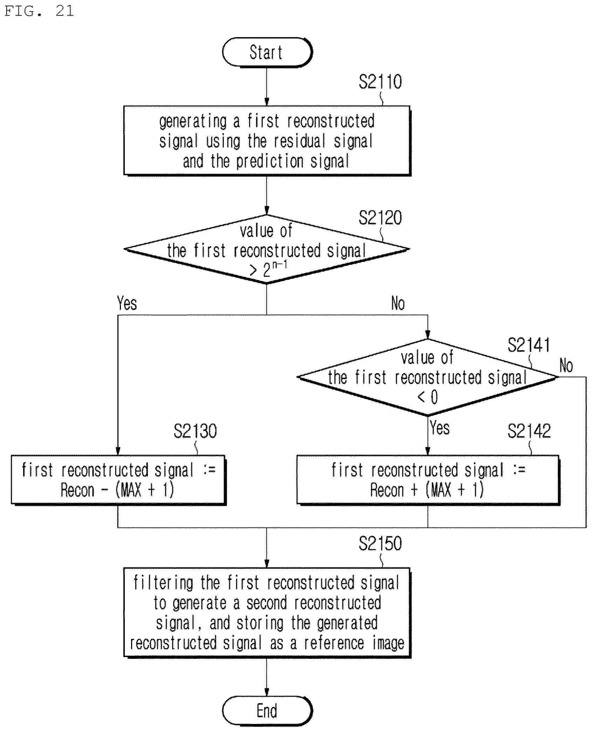

FIG. 21 is a view illustrating an embodiment of an operation for generating reconstructed signal by using a periodicity of digital hologram signal.

When generating a reconstructed signal using decoded, inverse-quantized and inverse-transformed residual signals and prediction signals, there are cases where the value of the signal is smaller or larger than the range $[0, 2^{n-1}]$. In the past, clipping was performed with a value of 0 when the signal was smaller than the minimum value and $2^{n-1}$ when the signal was larger than the maximum value. In the present disclosure, the first reconstructed signal can be clipped to have a value more similar to the actual value, considering the periodicity of the signal. The algorithm for generating the first reconstructed signal is as follows.

At step S2110, the decoding apparatus generates a first reconstructed signal using the residual signal and the prediction signal.

At step S2120, the decoding apparatus may determine whether the value of the first reconstructed signal is greater than $2^{n-1}$. If the value of the first reconstructed signal is greater than $2^{n-1}$, at step S2130, the decoding apparatus may adjust the first reconstructed signal using the following method.

[Equation 15]

$$\text{Recon}' := \text{Recon} - (\text{MAX} + 1)$$

Recon is the reconstructed signal, and Recon' can specify the reconstructed signal generated based on Recon. MAX can mean the maximum value of the residual signal.

If the value of the first reconstructed signal is not greater than $2^{n-1}$, at step S2141, the decoding apparatus may determine whether the value of the first reconstructed signal is less than zero. If the value of the first reconstructed signal is greater than zero, the decoding apparatus may filter the first reconstructed signal to generate a second reconstructed signal, and store the second reconstructed signal as a reference image.

If the value of the first reconstructed signal is less than zero, at step S2142, the decoding apparatus may adjust the first reconstructed signal using the following method.

[Equation 16]

$$\text{Recon}' \coloneqq \text{Recon} + (\text{MAX} + 1)$$

Recon is the reconstructed signal, and Recon' can refer to the reconstructed signal generated based on Recon. MAX may refer to a maximum value of the residual signal.

At step S2150, the decoding apparatus may filter the first reconstructed signal to generate a second reconstructed signal, and store the generated reconstructed signal as a reference image.

Embodiments of reconstructed signals generated using the above methods may be as described below.

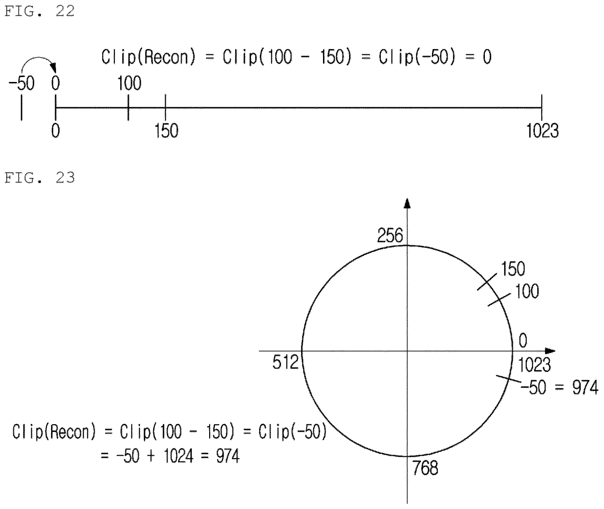

FIG. 22 and FIG. 23 are views illustrating embodiments of generated residual signal.

For example, for a value of n of 10, a signal with no periodicity may be represented as shown in FIG. 22. On the other hand, for a value of n = 10, a signal with a periodicity may be represented as shown in FIG. 23. When generating the first reconstructed signal, if the value of the residual signal is -150 and the value of the prediction signal is 100, the value of the first reconstructed signal is -50, as shown in FIG. 22, and in HEVC the first reconstructed signal is generated with a value of 0 through the clipping function. In the present invention, the value of the first reconstructed signal can be clipped to 974, which is the same value as -50, by considering the periodicity of the signal, as shown in FIG. 23.

Description of HEVC

Description of Terms - Terms for the HEVC standard. The relationship between terms used in the standard and terms used in the invention is as follows.

Clipping: means cutting off the exceeding value of the signal. In the present invention, clipping means a process of converting a value into a value within a range when a value exceeds a corresponding range.

recSamples: may mean a first reconstructed signal generated via the adder 255. Alternatively, it may mean a second reconstructed signal.

predSamples: means a prediction signal.

resSamples: means a residual signal.

Clip3 (x,y,z): A function that receives a minimum value (x), a maximum value (y), and a signal (z) as inputs and outputs a converted value by clipping the signal value. If the signal value is less than the minimum value, the signal value is converted to the minimum value, if the signal value is greater than the maximum value, the signal value is converted to the maximum value, and in other cases, the signal value is converted to the signal value and outputted.

BitDepth_Y: means the BitDepth (n) of the luma component signal.

BitDepth_C: BitDepth (n) of chroma component signal.

Clip1_Y(x): A function that receives a luma component signal (x) as an input and outputs a converted value by clipping a range of the input signal.

Clip1_C(x): A function that receives a chroma component signal (x) as an input and outputs a converted value by clipping for a range of the input signal.

clipCidx1: means Clip1_Y or Clip1_C.

xCurr: means the x position of the signal block to be reconstructed.

yCurr: means the y position of the signal block to be reconstructed.

nCurrSw x nCurrSh: means the size of the signal block to be reconstructed.

In HEVC, the following clipping function is conventionally used in a process of generating a first reconstructed signal.

[Equation 17]

$$Clip3\ (x,y,z) = \begin{cases} x; z < x \\ y; z > y \\ z; otherwise \end{cases}$$

$$Clip1_Y(x) = Clip3\ (0, (1 \ll BitDepth_Y) - 1, x)$$

$$Clip1_C(x) = Clip3\ (0, (1 \ll BitDepth_C) - 1, x)$$

$$recSamples\ [xCurr + i][yCurr + j] = clipCidx1(predSamples[i][j] +$$

$$recSamples\ [i][j])with\ i = 0 \ldots nCurrSw - 1, j = 0 \ldots nCurrSh - 1$$

According to an embodiment of the present disclosure, when a first reconstructed signal is generated by using a residual signal and a prediction signal for a signal with periodicity, the following clipping function, which is modified by considering periodicity, may be used.

[Equation 18]

$$Clip3\_Phase(minVal, maxVal, x) =$$

$$\begin{cases} x; minVal \leq x \leq maxVal \\ x\%(maxVal + 1); x > maxVal \\ x \ \% \ (maxVal + 1) + (maxVal + 1); \ x < minVal \end{cases}$$

$$ClipBD\_Phase_Y(x) = Clip3\_Phase \ (0, (1 \ll BitDepth_Y) - 1, x)$$

$$ClipBD\_Phase_C(x) = Clip3\_Phase \ (0, (1 \ll BitDepth_C) - 1, x)$$

$$recSamples \ [xCurr + i][yCurr + j] = \ clipCidx1(predSamples[i][j] +$$

$$recSamples \ [i][j])with \ i \ = 0 \dots nCurrSw - 1, j = 0 \dots nCurrSh - 1$$

The function Clip3_Phase may be a function of performing clipping by using minVal, a minimum value of a signal range, maxVal, a maximum value of the signal range, and an input value x. When the x value is within the signal range, the clipping function may output the x value. When the x value exceeds the maximum value of the signal range, the clipping function may output a x % (maxVal + 1) value. When the x value is less than the minimum value of the signal range, the clipping function may output a value of x % (maxVal + 1) + (maxVal + 1).

That is, an image encoding apparatus or an image decoding apparatus may generate a reconstructed signal (e.g., second reconstructed signal) transformed from a value of the initial reconstructed signal (e.g., first reconstructed signal) by a clipping function that uses the minimum value of a preset range and the maximum value of the preset range as input values.

Expressing the range of input phase

According to the present disclosure, the phase of the input signal is not limited to the range [0, 2π], and input signals with a wider phase range can also be used.

In other words, any input signal with a periodicity can be used as an input signal. The phase range of the input signal and a method for normalizing the phase range may be as described below.

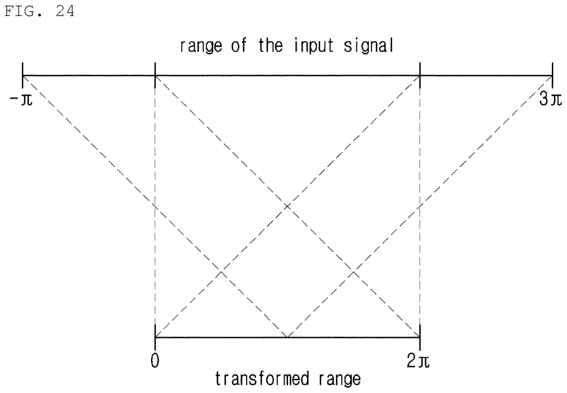

FIG. 24 is a view illustrating a phase range of input signal and a method for normalizing the phase range.

For example, the encoding apparatus may use an input signal in the range of [-n, 3n], as shown in FIG. 24.

The encoding apparatus can transform the range by subtracting 2π from the input signal if the phase value of the input signal is greater than or equal to 2n, and adding 2π if the phase value of the input signal is less than or equal to zero.

In other words, by normalizing the minimum range of the input signal phase to zero and the maximum range to 2n, the method of the present disclosure can be used.

In the above-described embodiments, the methods are described based on the flowcharts with a series of steps or units, but the present invention is not limited to the order of the steps, and rather, some steps may be performed simultaneously or in different order with other steps. In addition, it should be appreciated by one of ordinary skill in the art that the steps in the flowcharts do not exclude each other and that other steps may be added to the flowcharts or some of the steps may be deleted from the flowcharts without influencing the scope of the present invention.

Various embodiments of the present disclosure are intended to explain representative aspects of the present disclosure, rather than listing all possible combinations, and matters described in various embodiments may be applied independently or in a combination of two or more.

In addition, various embodiments of the present disclosure may be implemented by hardware, firmware, software, or a combination thereof. For hardware implementation, may be implemented by one or more application-specific integrated circuits (ASICs), digital signal processors (DSPs), digital signal processing devices (DSPDs), programmable logic devices (PLDs), field programmable gate arrays (FPGAs), processor (general processor), controller, microcontroller, microprocessor, or the like.

The scope of the present disclosure includes software or machine-executable instructions (e.g., operating system, application, firmware, program, etc.) that cause operations according to methods of various embodiments to be executed on a device or computer, or non-transitory computer-readable medium executable on a device or computer storing software or instruction.

**Claims**

1. A method for decoding an image, the method comprising:

   generating a prediction signal for a current signal;
   decoding a residual signal from a bitstream;
   generating an initial reconstructed signal based on the prediction signal and the residual signal; and
   generating a transformed reconstructed signal by transforming a value of the initial reconstructed signal to have a size value of a preset range,
   wherein the transformed reconstructed signal is generated based on a period of a signal,
   wherein the preset range is a period range of a signal.

2. The method of claim 1, wherein an absolute value of the maximum value of the preset range is equal to an absolute value of the minimum value of the preset range.

3. The method of claim 1, wherein the generating the transformed reconstructed signal is determined whether to be performed based on a size of the initial reconstructed signal.

4. The method of claim 3, wherein in response to the size of the initial reconstructed signal being within the preset range, the generating the transformed reconstructed signal is determined not to be performed.

5. The method of claim 3, wherein the generating the transformed reconstructed signal is **characterized by** transforming the reconstructed signal by using a maximum value of the preset range based on a sign of the initial reconstructed signal in response to a size value of the initial reconstructed signal not being a value within the preset range.

6. The method of claim 1, wherein the generating the transformed reconstructed signal is **characterized by** generating the transformed reconstructed signal from the initial reconstructed signal by using clipping function having a minimum value of the preset range and a maximum value of the preset range as input values.

7. The method of claim 1, wherein the decoding method further comprises normalizing a range of a value of the initial reconstructed signal, in response to the value of the initial reconstructed signal is greater than the preset range.

8. A method for encoding an image, the method comprising:

   generating a prediction signal for an input signal;
   calculating an initial residual signal, which is a difference value between the input signal and the prediction signal;
   generating a transformed residual signal by transforming a value of the initial residual signal to have a size value within a preset range; and
   encoding the transformed residual signal,
   wherein the transformed residual signal is generated based on a period of a signal,
   wherein the preset range is a range of the period of the signal.

9. The method of claim 8, wherein an absolute value of the maximum value of the preset range is equal to an absolute value of the minimum value of the preset range.

10. The method of claim 8, wherein the generating the transformed residual signal is determined whether to be performed based on a size of the initial residual signal.

11. The method of claim 10, wherein in response to the size of the initial residual signal being within the preset range, the generating the transformed reconstructed signal is determined not to be performed.

12. The method of claim 10, wherein the generating the transformed residual signal is **characterized by** transforming the residual signal by using a maximum value of the preset range based on a sign of the initial residual signal in response to a size value of the initial residual signal not being a value within the preset range.

**EP 4 443 245 A1**

13. The method of claim 8, wherein the method further comprising:

   decoding the transformed residual signal;
   generating an initial reconstructed signal based on the prediction signal and the residual signal; and
   generating a transformed reconstructed signal by transforming a value of the initial reconstructed signal to have a size value of a preset range,
   wherein the generating the transformed reconstructed signal is **characterized by** generating the transformed reconstructed signal from the initial reconstructed signal by using clipping function having a minimum value of the preset range and a maximum value of the preset range as input values.

14. The method of claim 8, wherein the encoding method further comprises normalizing a range of a value of the initial residual signal, in response to the value of the initial residual signal is greater than the preset range.

15. A recording medium storing a bitstream generated by an image encoding method, wherein the image encoding method comprises:

   generating a prediction signal for an input signal;
   calculating an initial residual signal, which is a difference value between the input signal and the prediction signal;
   generating a transformed residual signal by transforming a value of the initial residual signal to have a size value within a preset range; and
   encoding the transformed residual signal,
   wherein the transformed residual signal is generated based on a period of a signal,
   wherein the preset range is a range of the period of the signal.

FIG. 1

FIG. 2

FIG. 3

range of signal

-5  0                                    255  260
|   |                                    |    |
    0                                    255

FIG. 4

FIG. 5

$I = P + E = Clip(1.8\pi + 0.4\pi) = Clip(2.2\pi)$

FIG. 6

$$I = P + E = Clip(0.6\pi - 0.8\pi) = Clip(-0.2\pi)$$

FIG. 7

```
                        ┌─────────┐
                        │  Start  │
                        └────┬────┘
                             │           S710
        ┌────────────────────┴────────────────────┐
        │        calculating a residual signal     │
        │           between the original signal    │
        │            and the prediction signal      │
        └────────────────────┬────────────────────┘
                             │           S720
        ┌────────────────────┴────────────────────┐
        │        generating a residual signal in   │
        │        which the range of the residual   │
        │        signal is converted to [-π, π]    │
        └────────────────────┬────────────────────┘
                             │           S730
        ┌────────────────────┴────────────────────┐
        │    performing a transform, quantization, │
        │      and encoding on the residual signal │
        └────────────────────┬────────────────────┘
                             │           S740
        ┌────────────────────┴────────────────────┐
        │         performing decoding, inverse     │
        │    quantization, and inverse transformation│
        │          on the encoded residual signal  │
        └────────────────────┬────────────────────┘
                             │           S750
        ┌────────────────────┴────────────────────┐
        │        generating a first reconstructed  │
        │        signal using the decoded residual │
        │          signal and the prediction signal│
        └────────────────────┬────────────────────┘
                             │           S760
        ┌────────────────────┴────────────────────┐
        │      converting the range of the first   │
        │        reconstructed signal to [0, 2π] by│
        │    considering the periodicity of the signal│
        └────────────────────┬────────────────────┘
                             │           S770
        ┌────────────────────┴────────────────────┐
        │   filtering the first reconstructed signal│
        │        to generate a second reconstructed│
        │     signal, and store as a reference image│
        └────────────────────┬────────────────────┘
                             │
                        ┌────┴────┐
                        │   End   │
                        └─────────┘
```

FIG.8

```
                          ┌──────────┐
                          │  Start   │
                          └────┬─────┘
                               │
          ┌────────────────────▼─────────────────────┐
          │      image prediction mean for generating │
          │   a prediction signal with respect to an  │
          │   original signal that is currently to be │
          │                 encoded                   │
          └────────────────────┬─────────────────────┘
                               │
          ┌────────────────────▼─────────────────────┐   ┌──────────────────────────┐
          │     residual signal generating mean for  │◄──│ generate the residual    │
          │     generating a residual signal between │   │ signal to be within a    │
          │   the original signal and the prediction │   │ range of [-π, π]         │
          │                  signal                  │   └──────────────────────────┘
          └────────────────────┬─────────────────────┘
                               │
          ┌────────────────────▼─────────────────────┐
          │         encoding mean for encoding       │
          │            the residual signal           │
          └────────────────────┬─────────────────────┘
                               │
          ┌────────────────────▼─────────────────────┐
          │      decoding mean for reconstructing    │
          │         the encoded residual signal      │
          └────────────────────┬─────────────────────┘
                               │
          ┌────────────────────▼─────────────────────┐   ┌──────────────────────────┐
          │   reconstructing mean for reconstructing │◄──│ generate the reconstructed│
          │    the original signal using the decoded │   │ signal by performing      │
          │   residual signal and the prediction     │   │ clipping on the           │
          │                  signal                  │   │ reconstructed image using │
          └────────────────────┬─────────────────────┘   │ a periodicity             │
                               │                          └──────────────────────────┘
          ┌────────────────────▼─────────────────────┐
          │         filtering mean for filtering     │
          │       the reconstructed original signal  │
          └────────────────────┬─────────────────────┘
                               │
                          ┌────▼─────┐
                          │   End    │
                          └──────────┘
```

FIG. 9

Start

decoding mean to reconstruct
the encoded residual signal

reconstructing mean for
reconstructing the original signal
using the decoded residual signal
and the prediction signal

generate the reconstructed
signal by performing
clipping on the reconstructed
image using a periodicity

filtering mean for filtering
the reconstructed original signal

End

FIG. 10

```
                          ┌──────────┐
                          │  Start   │
                          └────┬─────┘
                               │                    S1010
                 ┌─────────────▼──────────────┐
                 │ generating a residual signal│
                 │  using the original signal  │
                 │  and the prediction signal  │
                 └─────────────┬──────────────┘
                               │                    S1020
                         ╱─────▼──────╲
                        ╱ the absolute ╲        No
                       ⟨ value of the   ⟩─────────────────────┐
                        ╲ residual signal╱                      │
                         ╲   > π       ╱                        │
                          ╲────┬──────╱                         │
                            Yes │                               │
                               │                    S1030       │
                         ╱─────▼──────────────╲                 │
                        ⟨ the residual signal value > 0 ⟩        │
                         ╲──────┬─────────────╱                 │
                  Yes ┌────────┴──────────┐ No                  │
         S1041        │                   │       S1042         │
   ┌─────────────────▼──┐         ┌──────▼──────────────────┐   │
   │ residual signal:=  │         │ residual signal:=       │   │
   │ (Resi + π) % 2π - π │         │ (Resi - π) % 2π + π     │   │
   │ or residual signal:=│         │ or residual signal:=   │   │
   │    Resi - 2π        │         │    Resi + 2π            │   │
   └──────────┬─────────┘         └──────────┬──────────────┘   │
              └──────────┬───────────────────┘                  │
                         │◄───────────────────────────────────┘
                         │                    S1050
           ┌─────────────▼──────────────┐
           │ performing transform encoding,│
           │  quantization, and entropy   │
           │  encoding on the residual signal│
           └─────────────┬──────────────┘
                         │
                   ┌─────▼─────┐
                   │   End     │
                   └───────────┘
```

FIG. 11

```
                    ┌──────────┐
                    │  Start   │
                    └────┬─────┘
                         │                    S1110
              ┌──────────▼──────────────┐
              │  generating a residual signal
              │   using the original signal
              │    and the prediction signal
              └──────────┬──────────────┘
                         │                    S1120
                    ◇────▼────◇                     No
                   the absolute
                value of the residual signal ────────┐
                      > 2^(n-1)                       │
                    ◇─────────◇                       │
                         │Yes                         │
                         │              S1130         │
                    ◇────▼────◇                       │
              the residual signal value > 0           │
                    ◇─────────◇                       │
              Yes │             │ No                  │
      S1141        │             │        S1142       │
   ┌──────────────▼──┐      ┌───▼──────────────┐     │
   │ residual signal :=      │ residual signal :=     │
   │(Resi − MIN) % (MAX−MIN) + MIN │(Resi + MIN) % (MAX−MIN) − MIN │
   └──────────────┬──┘      └───┬──────────────┘     │
                  └──────┬──────┘────────────────────┘
                         │              S1150
              ┌──────────▼──────────────┐
              │  performing transform encoding,
              │    quantization, and entropy
              │  encoding on the residual signal
              └──────────┬──────────────┘
                    ┌────▼─────┐
                    │   End    │
                    └──────────┘
```

Error = 964 − 100 = 864

```
        100                                    964
 ├───────┼──────────────────────────────────────┼───┤
 0                                                  1023
```

FIG. 12

$$Error = 964 - 100 = 864$$

100                                                     964

0                                                    1023

FIG. 13

256

100

0

1023

512

964

$$Error = (864 - (-512))\%1024 - 512 = -160$$

768

FIG. 14

```
                    ( Start )
                        |
                        |                    S1410
                        v
        +-------------------------------+
        |  generating a first reconstructed |
        |  signal using the residual signal |
        |     and the prediction signal     |
        +-------------------------------+
                        |
                        |                    S1420
                        v
                   /\            No
          the absolute  \ -----------------+
        value of the residual signal        |
              > 2π                          |
                   \/                       |
                    | Yes                   |
                    |           S1430       |
                    v                       |
              /               \             |
         the residual signal value > 0      |
              \               /             |
             Yes  \       / No              |
          +--------+      +--------+         |
          |               |                 |
   S1441  |               |   S1442         |
          v               v                 |
  +----------------+  +---------------------------+
  | residual signal := |  | residual signal :=        |
  | (Resi - (MAX - MIN) |  | (Resi + MIN) % (MAX-MIN) - MIN |
  +----------------+  +---------------------------+
          |               |                 |
          +-------+-------+                 |
                  |                         |
                  +-------------------------+
                  |              S1450
                  v
        +-------------------------------+
        | performing transform encoding,  |
        |    quantization, and entropy     |
        |  encoding on the residual signal |
        +-------------------------------+
                  |
                  v
               ( End )
```

FIG. 15

Error = 964 − 100 = 864

100 ┃ 964

0 1023

FIG. 16

256

100

0

512 1023

964

Error = (964 − 100) − 1024 = 864 − 1024 = −160

768

FIG. 17

Start

↓

S1710

generating a first reconstructed
signal using the residual signal
and the prediction signal

↓

S1720

value of
the first reconstructed signal
$> 2\pi$

Yes ← → No

No → value of
the first reconstructed signal
$< 0$   S1741

S1730

first reconstructed signal
:= Recon % $2\pi$ or
first reconstructed signal
:= Recon − $2\pi$

Yes ↓ S1742

first reconstructed signal
:= Recon % $2\pi$ + $2\pi$ or
first reconstructed signal
:= Recon + $2\pi$

↓

S1750

filtering the first reconstructed
signal to generate a second reconstructed
signal, and storing the generated
reconstructed signal as a reference image

↓

End

FIG. 18

```
                    ┌─────────────┐
                    │    Start    │
                    └──────┬──────┘
                           │                    S1810
                    ┌──────▼──────────────┐
                    │ generating a first  │
                    │ reconstructed       │
                    │ signal using the    │
                    │ residual signal     │
                    │ and the prediction  │
                    │ signal              │
                    └──────┬──────────────┘
                           │                    S1820
                       ◇───▼───◇
                      value of
              the first reconstructed signal
                       > 2^{n-1}
```

$> 2^{n-1}$

filtering the first reconstructed signal to generate a second reconstructed signal, and storing the generated reconstructed signal as a reference image

S1830 — first reconstructed signal := Recon % (MAX + 1)

S1841 — value of the first reconstructed signal < 0

S1842 — first reconstructed signal := Recon % (MAX + 1) + (MAX + 1)

S1850

FIG. 19

Clip(Recon) = Clip(100 − 150) = Clip(−50) = 0

−50   0
$\vert$
0        100
$\vert$        $\vert$
         150                                          1023

FIG. 20

Clip(Recon) = Clip(100 − 150) = Clip(−50)
          = −50%1024 + 1024 = 974

FIG. 21

```
                          ┌──────────┐
                          │  Start   │
                          └────┬─────┘
                               │              S2110
                  ┌────────────▼────────────┐
                  │ generating a first       │
                  │ reconstructed signal     │
                  │ using the residual signal│
                  │ and the prediction signal│
                  └────────────┬────────────┘
                               │              S2120
                        ◇ value of ◇
                   the first reconstructed signal
                          > 2^(n-1)
```

value of the first reconstructed signal $> 2^{n-1}$   S2120

Yes → No

value of the first reconstructed signal $< 0$   S2141   No

Yes   S2142

S2130

first reconstructed signal :=
Recon − (MAX + 1)

first reconstructed signal :=
Recon + (MAX + 1)

S2150

filtering the first reconstructed signal
to generate a second reconstructed
signal, and storing the generated
reconstructed signal as a reference image

End

FIG. 22

$Clip(Recon) = Clip(100 - 150) = Clip(-50) = 0$

-50    0      100

0            150                                    1023

FIG. 23

256

150
100

0

512                                                1023

-50 = 974

768

$Clip(Recon) = Clip(100 - 150) = Clip(-50)$
$= -50 + 1024 = 974$

FIG. 24

range of the input signal

$-\pi$                    $3\pi$

0                    $2\pi$

transformed range

## INTERNATIONAL SEARCH REPORT

| International application No. |
|---|
| **PCT/KR2022/019221** |

| **A.** | **CLASSIFICATION OF SUBJECT MATTER** |
|---|---|

**G03H 1/08**(2006.01)i; **H04N 19/597**(2014.01)i; **H04N 19/147**(2014.01)i

According to International Patent Classification (IPC) or to both national classification and IPC

| **B.** | **FIELDS SEARCHED** |
|---|---|

Minimum documentation searched (classification system followed by classification symbols)

G03H 1/08(2006.01); H03D 3/00(2006.01); H04N 19/117(2014.01); H04N 19/137(2014.01); H04N 19/50(2014.01); H04N 19/593(2014.01); H04N 19/60(2014.01); H04N 19/94(2014.01); H04N 7/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: image, encode, decode, predict, signal, generate, bitstream, differential signal, recover, predetermine, range, maximum, minimum, clipping

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | KR 10-2010-0058646 A (NIPPON TELEGRAPH AND TELEPHONE CORPORATION) 03 June 2010 (2010-06-03)<br>See paragraphs [0071]-[0083]; claims 1 and 3; and figures 2-3. | 1-15 |
| Y | KR 10-0368013 B1 (ROKE MANOR RESEARCH LTD. et al.) 26 February 2003 (2003-02-26)<br>See claims 1, 4 and 9; and figures 2 and 4. | 1-15 |
| A | KR 10-2008-0007060 A (KWANGWOON UNIVERSITY INDUSTRY-ACADEMIC COLLABORATION FOUNDATION et al.) 17 January 2008 (2008-01-17)<br>See claims 1-29; and figures 1-6. | 1-15 |
| A | US 2011-0150072 A1 (HAN, Ki-Hun) 23 June 2011 (2011-06-23)<br>See claims 1-22; and figures 3-9. | 1-15 |
| A | JP 2021-175090 A (JAPAN BROADCASTING CORP.) 01 November 2021 (2021-11-01)<br>See claim 1; and figures 1-6. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 February 2023** | **06 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2022/019221**

| Patent document cited in search report | | | Publication date (day/month/year) | Patent family member(s) | | | Publication date (day/month/year) |
|---|---|---|---|---|---|---|---|
| KR | 10-2010-0058646 | A | 03 June 2010 | CN | 101836456 | A | 15 September 2010 |
| | | | | EP | 2204999 | A1 | 07 July 2010 |
| | | | | JP | 4987086 | B2 | 25 July 2012 |
| | | | | US | 2010-0215102 | A1 | 26 August 2010 |
| | | | | WO | 2009-057506 | A1 | 10 March 2011 |
| KR | 10-0368013 | B1 | 26 February 2003 | EP | 0772905 | A1 | 14 May 1997 |
| | | | | JP | 10-504952 | A | 12 May 1998 |
| | | | | US | 5943370 | A | 24 August 1999 |
| | | | | WO | 96-36104 | A1 | 14 November 1996 |
| KR | 10-2008-0007060 | A | 17 January 2008 | KR | 10-0813001 | B1 | 13 March 2008 |
| US | 2011-0150072 | A1 | 23 June 2011 | JP | 2011-130410 | A | 30 June 2011 |
| | | | | KR | 10-2011-0071231 | A | 29 June 2011 |
| JP | 2021-175090 | A | 01 November 2021 | | None | | |

Form PCT/ISA/210 (patent family annex) (July 2022)